(19) Europäisches Patentamt
European Patent Office
Office européen des brevets

(11) **EP 2 101 297 B1**

(12) **EUROPÄISCHE PATENTSCHRIFT**

(45) Veröffentlichungstag und Bekanntmachung des Hinweises auf die Patenterteilung:
**15.05.2013  Patentblatt 2013/20**

(51) Int Cl.:
***G06T 7/00*** *(2006.01)*

(21) Anmeldenummer: **09003241.8**

(22) Anmeldetag: **06.03.2009**

(54) **Verfahren zum Kalibrieren eines Bühne-Kamera-Systems eines Mikroskops**

Method for calibrating a stage-camera system of a microscope

Procédé de calibrage d'un système de caméra-scène d'un microscope

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **12.03.2008  DE 102008014030**

(43) Veröffentlichungstag der Anmeldung:
**16.09.2009  Patentblatt 2009/38**

(73) Patentinhaber: **Fraunhofer-Gesellschaft zur Förderung der angewandten Forschung e.V.
80686 München (DE)**

(72) Erfinder:
- **Steckhan, Dirk
  81827 München (DE)**
- **Elter, Matthias
  91054 Erlangen (DE)**
- **Zerfass, Thorsten
  90408 Nürnberg (DE)**

(74) Vertreter: **Hofmann, Stefan et al
Rau, Schneck & Hübner
Patentanwälte
Königstraße 2
90402 Nürnberg (DE)**

(56) Entgegenhaltungen:
WO-A-2004/034124    WO-A-2005/017597
US-A- 3 986 007    US-A1- 2002 149 628
US-A1- 2004 114 218    US-A1- 2006 034 543
US-A1- 2007 211 243

- **SETH HUTCHINSON ET AL: "A Tutorial on Visual Servo Control" IEEE TRANSACTIONS ON ROBOTICS AND AUTOMATION, IEEE INC, NEW YORK, US, Bd. 12, Nr. 5, 1. Oktober 1996 (1996-10-01), XP011053146 ISSN: 1042-296X**
- **AMMI M ET AL: "Flexible Microscope Calibration using Virtual Pattern for 3-D Telemicromanipulation" ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18. April 2005 (2005-04-18), Seiten 3888-3893, XP010871523 ISBN: 978-0-7803-8914-4**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Kalibrieren eines Bühne-Kamera-Systems eines Mikroskops. Ferner betrifft die Erfindung ein Mikroskop mit einem Bühne-Kamera-System.

Die computerassistierte Mikroskopie beschäftigt sich mit der Aufnahme und Analyse von biologischen Proben. Beispiele hierfür sind die automatische Untersuchung von Zervix-Zellen und die automatische Erstellung von Differentialblutbildern. Voll automatisierte Mikroskope steuern mit einer Steuereinrichtung alle mechanischen und elektronischen Komponenten des Mikroskops, so dass präparierte Objektträger vollständig autonom gescannt und untersucht werden können.

Das Kalibrieren der automatisierten Mikroskope erfolgt manuell mittels eines Kalibrierobjektträgers. Der Kalibrierobjektträger wird auf einer verfahrbaren Bühne des Mikroskops angeordnet. Von einer markanten Stelle des Kalibrierobjektträgers wird ein Bild aufgenommen. Die Position der markanten Stelle in dem Bild wird manuell, beispielsweise mit einem Mauszeiger, bestimmt. Daraufhin wird die Bühne mit dem Kalibrierobjektträger um eine definierte Verfahrstrecke verfahren. Es wird nun ein weiteres Bild aufgenommen. Die Position der markanten Stelle in diesem Bild wird erneut manuell bestimmt. Aus der Verfahrstrecke der Bühne und den manuell bestimmten Positionen der markanten Stelle des Kalibrierobjektträgers kann grob ermittelt werden, welche Verfahrstrecke der Bühne welcher Objektverschiebestrecke in einem Bild der Kamera entspricht. Nachteilig bei einem derartigen manuellen Verfahren zum Kalibrieren des Bühne-Kamera-Systems des Mikroskops ist, dass der Kalibriervorgang zeitaufwändig ist. Darüber hinaus ist die manuelle Kalibrierung ungenau, wobei der Grad der Ungenauigkeit variiert.

Aus der US 2002 / 0149628 A1 ist ein Mikroskop mit einer Kamera und relative dazu verfahrenen Bühne und Sonde bekannt, wobei die Bühne und die Sonde werden unabhängig voneinander verfahren. Ein Benutzer kann die Sonde zu einer bestimmten Position in Gerätekoordinaten lenken, indem er die entsprechende Position in Bildkoordinaten in einer graphischen Benutzeroberfläche auswählt. Dazu wird ein Kalibriermaß mittels manuell eingegebener Punkte ermittelt, welches das Umrechnen zwischen den beiden Koordinatensystemen erlaubt.

Aus der US 2006/0034543 A1 ist ein Mikroskop mit einer Kamera und einer relativ dazu verfahrbaren Bühne bekannt. Um von einem Objektträger in einer gewünschten Vergrößerung ein Gesamtbild zu erstellen, werden benachbarte Bereiche des Objektträgers nacheinander angefahren. Zum exakten Positionieren der Bühne werden zwei sich überlappende Bilder untersucht und ein Korrekturwert für das Verfahren der Bühne berechnet. Bei dem Korrekturwert handelt es sich um eine ganzzahlige Anzahl von Pixeln.

Aus der US 3 986 007 A ist ein Handhabungssystem für Werkstücke bekannt, bei dem ein Werkstück in einer zufälligen Position auf einer lichtdurchlässigen Bühne angeordnet wird. Die Bühne wird beleuchtet, sodass die Umrisse des Werkstücks über einen Spiegel auf einem optischen Sensor abgebildet werden. Das Werkstück wird anschließend von einem Greifer aufgenommen und weiter transportiert. Um eine Zuordnung von Bild-Koordinaten zu Greifer-Koordinaten zu ermöglichen, wird das Werkstück mittels des Greifers linear verfahren und dessen Verschiebung in mehreren aufgenommenen Bildern erfasst.

Aus dem Fachartikel "A Tutorial on Visual Servo Control" von Seth Hutchinson et al. ist ein Industrieroboter bekannt, der mittels einer Kamera gesteuert wird. Hierzu werden den Roboter-Koordinaten entsprechende Bild-Koordinaten zugeordnet. Die Zuordnung erfolgt beispielsweise durch das Bestimmen und Tracken von Merkmalen in den aufgenommenen Bildern.

Der Erfindung liegt daher die Aufgabe zugrunde, ein Verfahren zum Kalibrieren eines Bühne-Kamera-Systems eines Mikroskops zu schaffen, dass schnell und genau ist.

Diese Aufgabe wird erfindungsgemäß durch ein Verfahren mit den Merkmalen des Anspruchs 1 gelöst. Erfindungsgemäß wurde erkannt, dass durch das Registrieren eines Kalibrierbildes mit einem Referenzbild anhand mindestens eines beliebigen Objektes die Objektverschiebestrecke sehr genau ermittelbar und das Kalibrieren voll automatisierbar ist. Nach dem Aufnehmen des Referenzbildes in einer beliebigen Referenzstellung wird das Bühne-Kamera-System mittels des mindestens einen elektrischen Antriebsmotor in die Kalibrierstellung verfahren. Die Kalibrierstellung unterscheidet sich von der Referenzstellung. In der Kalibrierstellung muss zumindest ein Teil des mindestens einen Objektes, das in dem Referenzbild aufgenommen wurde, sich in dem Aufnahmebereich der Kamera befinden, so dass dieser Teil in dem Kalibrierbild aufgenommen werden kann. Die Verfahrstrecke der Bühne relativ zu der Kamera ist einfach ermittelbar, da das Verfahren mittels des mindestens einen Antriebsmotors gesteuert oder geregelt erfolgt, so dass alle erforderlichen Informationen zum Ermitteln der Verfahrstrecke in einer elektronischen Steuereinrichtung vorliegen. Die Verfahrstrecke wird relativ zu dem ersten Koordinatensystem ermittelt, relativ zu dem auch die Bühne verfahren wird. Nach dem Aufnehmen des Kalibrierbildes wird dieses mit dem Referenzbild registriert. Das Registrieren erfolgt anhand des mindestens einen Objektes, das sich sowohl in dem Referenzbild als auch - zumindest teilweise - in dem Kalibrierbild finden lässt. Zum Registrieren des Kalibrierbildes sind flächenbasierte oder merkmalsbasierte Registrierverfahren einsetzbar, wie beispielsweise Korrelationsverfahren, mathematische Schätzer oder der sogenannte Harris-Comer-Detector. Das Registrieren des Kalibrierbildes mit dem Referenzbild liefert unmittelbar die Objektverschiebestrecke, um die das mindestens eine Objekt beim Verfahren der Bühne relativ zu der Kamera in dem Kalibrierbild relativ zu dem Referenzbild verschoben wurde. Die Objektverschiebestrecke wird relativ zu dem zweiten Koordinatensystem ermittelt, relativ zu dem auch das mindestens eine Objekt in den Bildern der Kamera verschoben wird. Aus der Verfahrstrecke und der Objektverschiebestrecke lässt sich ein Kalibriermaß ermitteln, das angibt, welche Verfahrstrecke in dem ersten Koordinatensystem welcher Objektverschiebestrecke in dem zweiten Koordinatensystem entspricht. Das erfindungsgemäße Verfahren ermöglicht eine vollautomatisierte, schnelle und genaue Kalibrierung des Bühne-Kamera-Systems.

Das Verfahren des Bühne-Kamera-Systems in mehrere unterschiedliche Kalibrierstellungen ermöglicht ein zuverlässiges Kalibrieren, da Fehler bei dem Ermitteln der Verfahrstrecke oder der Objektverschiebestrecke erkennbar sind. Darüber hinaus erhöht das Ermitteln des Kalibriermaßes mittels des Optimierungsverfahrens die Genauigkeit der Kalibrierung. Das Kalibriermaß wird durch das Lösen eines Gleichungssystems bestimmt. Werden mehrere Kalibrierbilder aufgenommen und dementsprechend mehrere Objektverschiebestrecken ermittelt, so ist das Gleichungssystem überbestimmt. Durch ein Optimierungsverfahren, das ein Gütefunktional, wie beispielsweise das minimale Fehlerquadrat, minimiert, kann das überbestimmte Gleichungssystem optimal gelöst werden. Vorzugsweise werden lineare Optimierungsverfahren eingesetzt, wie beispielsweise der Random-Sample-Consensus-Algorithmus (RANSAC), der Maximum-Likelihood-Estimation-Sample-Consensus-Algorithmus (MLESAC), der Minimum-Unbiased-Scale-Estimator (MUSE), der M-Estimator-Sample-Consensus-Algorithmus (MSAC) oder der Least-Mean-Squares-Algorithmus (LMS). Die Genauigkeit wird weiterhin durch das subpixelgenaue Registrieren erhöht. Subpixelgenau bedeutet, dass das Kalibrierbild mit dem Referenzbild mit einer Genauigkeit von Pixelbruchteilen der Auflösung der Kamera registrierbar ist. Die Objektverschiebestrecke kann somit mit einer höheren Genauigkeit als der Auflösegenauigkeit der Kamera ermittelt werden. Dies ist deswegen möglich, da subpixelgenaue Registrierverfahren die Intensitätsverteilungen in den Pixeln in dem Referenzbild und dem Kalibrierbild auswerten. Dies ist insbesondere dann vorteilhaft, wenn die Bühne relativ zu der Kamera mittels des mindestens einen elektrischen Antriebsmotors subpixelgenau positionierbar ist. Die bereits genannten flächenbasierten und merkmalsbasierten Registrierverfahren ermöglichen ein subpixelgenaues Registrieren. Als subpixelgenaues Registrierverfahren kann beispielsweise das Verfahren von Foroosh et al. verwendet werden, das in der Veröffentlichung "Extension of Phase Correlation to Subpixel Registration" (IEEE Transactions on Image Processing, Vol. 11, No. 3, März 2002) beschrieben ist. Bei diesem Verfahren wird davon ausgegangen, dass der Korrelationspeak bei im Subpixelbereich verschobenen Bildern, nicht in einem Pixel konzentriert ist, sondern in der direkten Nachbarschaft zum Hauptpeak noch Nebenpeaks existieren. Aus der Höhe der einzelnen Peaks lässt sich auf die subpixelgenaue Lage der Bilder schließen.

Eine Weiterbildung nach Anspruch 2 stellt ein schnelles Kalibrieren eines zweidimensional verfahrbaren Bühne-Kamera-Systems sicher, da bereits bei einem einmaligen Verfahren des Bühne-Kamera-Systems ein Kalibrieren in einer x-Richtung und einer y-Richtung möglich ist. Vorzugsweise wird das Bühne-Kamera-System zufallsgesteuert in einem definierten Bereich verfahren.

Ein Ermitteln der Verfahrstrecke nach Anspruch 3 ist einfach, wenn der mindestens eine elektrische Antriebsmotor als Schrittmotor ausgebildet ist.

Eine Weiterbildung nach Anspruch 4 ermöglicht größere Verfahrstrecken in unterschiedlichen Richtungen. Dies erhöht die Zuverlässigkeit der Kalibrierung.

Ein Optimierungsverfahren nach Anspruch 5 ist robust und genau. Der Minimum-Unbiased-Scale-Estimator ist in der Veröffentlichung von James V. Miller und Charles V. Steward "MUSE: Robust Surface Fitting using Unbiased Scale Estimates" (1996 IEEE Computer Society Conference on Computer Vision and Pattern Recognition, 1996, p. 300) beschrieben.

Ein Kalibriermaß nach Anspruch 6 ermöglicht die Berücksichtigung von einer Skalierung zwischen den Koordinatensystemen sowie von einer Rotation der Koordinatensysteme zueinander.

Der Erfindung liegt ferner die Aufgabe zugrunde, ein Mikroskop bereitzustellen, das schnell und genau kalibrierbar ist.

Diese Aufgabe wird erfindungsgemäß durch ein Mikroskop mit den Merkmalen des Anspruchs 7 gelöst. Die Vorteile des erfindungsgemäßen Mikroskops entsprechen den bereits beschriebenen Vorteilen des erfindungsgemäßen Verfahrens. Das Mikroskop ermöglicht das vollständige Automatisieren einer Vielzahl von medizinischen Untersuchungen. Derartige Untersuchungen sind beispielsweise das Screening von Zervix-Abstrichen, die automatische Erstellung von Differentialblutbildern und die Untersuchung von Erythrozyten bei Malaria-Untersuchungen. Die Registrier-Einheit ermöglicht ein genaues Kalibrieren des Bühne-Kamera-Systems. Dies ist insbesondere dann vorteilhaft, wenn die Bühne relativ zu der Kamera subpixelgenau positionierbar ist. Weiterhin ermöglicht die Kalibrier-Einheit ein exaktes und robustes Kalibrieren des Bühne-Kamera-Systems.

Eine Weiterbildung nach Anspruch 8 ermöglicht ein einfaches Ermitteln der Verfahrstrecke. Darüber hinaus ist die Bühne relativ zu der Kamera in einfacher Weise subpixelgenau positionierbar.

Weitere Merkmale und Vorteile der Erfindung ergeben sich aus der Beschreibung eines Ausführungsbeispieles anhand der Zeichnung. Es zeigen:

Fig. 1    eine schematische Darstellung eines Mikroskops mit einem Bühne-Kamera-System,

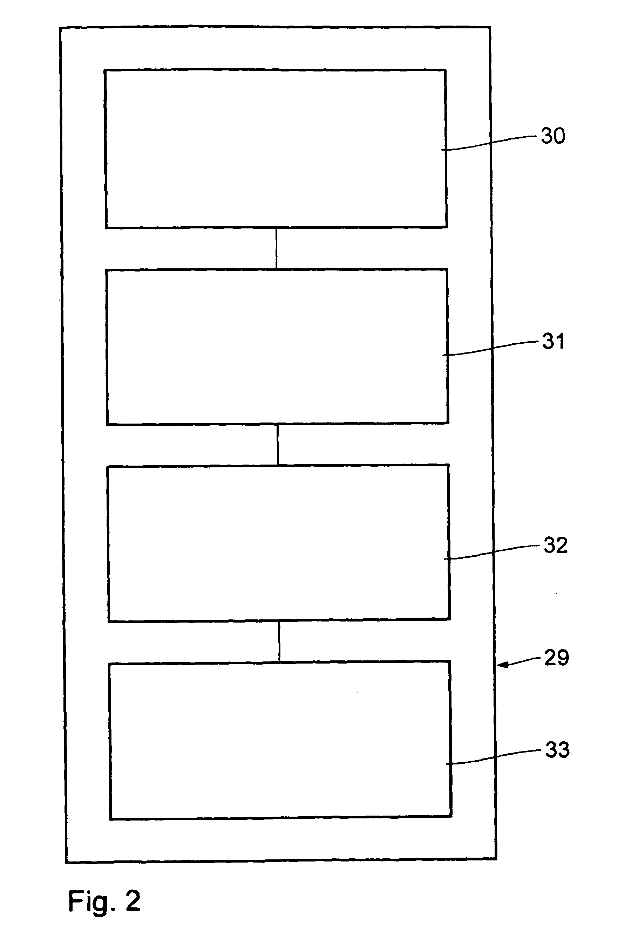

Fig. 2    eine schematische Darstellung einer elektronischen Steuereinrichtung des Bühne-Kamera-Systems in Fig. 1,

Fig. 3    eine schematische Darstellung des Bühne-Kamera-Systems in einer Referenzstellung, und

Fig. 4    eine schematische Darstellung des Bühne-Kamera-Systems in einer Kalibrierstellung.

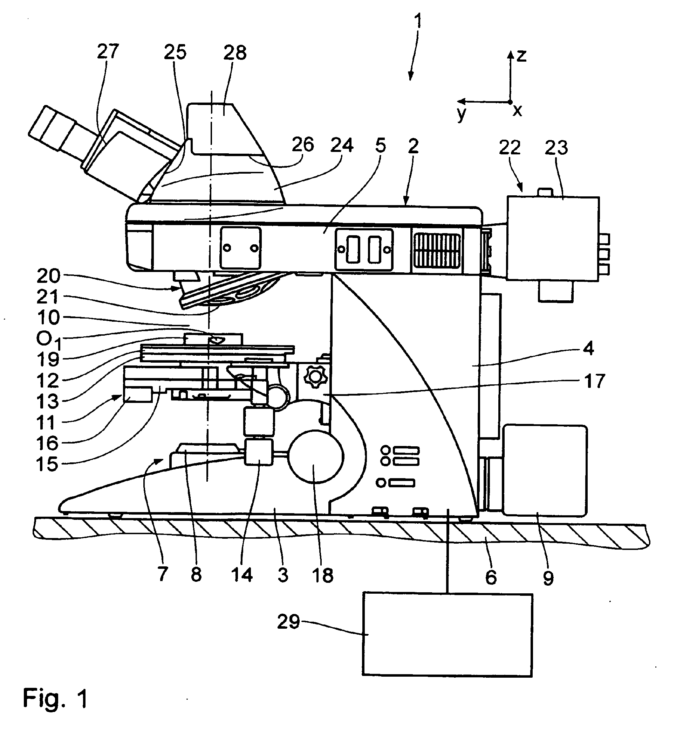

Fig. 1 zeigt ein Mikroskop 1, das als Digital-Mikroskop ausgebildet und in der computerassistierten Mikroskopie einsetzbar ist. Das Mikroskop 1 weist ein Stativ 2 mit einem Stativunterteil 3, einer Stativsäule 4 und einem Stativoberteil 5 auf. Das Stativunterteil 3 ist fußartig ausgebildet und dient zum sicheren Abstellen des Mikroskops 1 auf einer Abstellfläche 6. In das Stativunterteil 3 ist eine Durchlicht-Beleuchtungseinrichtung 7 integriert. Die Durchlicht-Beleuchtungseinrichtung 7 umfasst eine in dem Stativunterteil 3 integrierte Durchlicht-Beleuchtungsöffnung 8 und eine seitlich an dem Stativunterteil 3 angeordnete Durchlicht-Beleuchtungsquelle 9.

Die Stativsäule 4 verläuft im Wesentlichen senkrecht zu dem Stativunterteil 3 und dem Stativoberteil 5. Das Stativunterteil 3, die Stativsäule 4 und das Stativoberteil 5 sind im Querschnitt U-förmig zueinander angeordnet und begrenzen im Wesentlichen einen Mikroskopierraum 10.

In dem Mikroskopierraum 10 ist an der Stativsäule 4 ein Kreuzschlitten 11 mit einer Bühne 12 angeordnet. Die Bühne 12 ist auf einem x-Schlitten 13 fest angeordnet. Der x-Schlitten 13 ist mittels eines elektrischen x-Antriebsmotors 14 in einer x-Richtung auf einem y-Schlitten 15 verfahrbar. Der y-Schlitten 15 ist entsprechend mit einem elektrischen y-Antriebsmotor 16 in einer y-Richtung auf einem z-Schlitten 17 verfahrbar. Der z-Schlitten 17 ist mittels eines elektrischen z-Antriebsmotors 18 in einer z-Richtung an der dem Mikroskopierraum 10 zugewandten Seite der Stativsäule 4 verfahrbar. Die Antriebsmotoren 14, 16, 18 sind als Schrittmotoren ausgebildet. Auf der Bühne 12 ist ein Objektträger 19 mit zu untersuchenden Objekten $O_1$, $O_2$ angeordnet.

An einer dem Mikroskopierraum 10 zugewandten Seite des Stativoberteils 5 ist ein Objektivrevolver 20 mit mehreren Objektiven 21 drehbar angeordnet. In das Stativoberteil 5 ist eine Auflicht-Beleuchtungseinrichtung 22 integriert. Die Auflicht-Beleuchtungseinrichtung 22 weist eine in das Stativoberteil 5 integrierte und nicht näher dargestellte Auflicht-Beleuchtungsöffnung und eine seitlich an dem Stativoberteil 5 angeordnete Auflicht-Beleuchtungsquelle 23 auf.

An einer dem Objektivrevolver 20 gegenüberliegenden Seite des Stativoberteils 5 ist ein Strahlenteiler 24 mit einem Tubusausgang 25 und einem Kameraausgang 26 angeordnet. An dem Tubusausgang 25 ist ein Tubus 27 befestigt. Entsprechend ist an dem Kameraausgang 26 eine als Digital-Kamera ausgebildete Kamera 28 befestigt.

Die Antriebsmotoren 14, 16, 18 und die Kamera 28 sind mit einer elektronischen Steuereinrichtung 29 verbunden. Die Steuereinrichtung 29 dient zum Ansteuern der Antriebsmotoren 14, 16, 18, der Beleuchtungseinrichtungen 7, 22, des Objektivrevolvers 20 und der Kamera 28.

Die mittels des x-Antriebsmotors 14 und des y-Antriebsmotors 16 in einer x-y-Ebene verfahrbare Bühne 12, die Kamera 28 und die elektronische Steuereinrichtung 29 bilden ein zu kalibrierendes Bühne-Kamera-System. Zum Kalibrieren weist die Steuereinrichtung 29 eine Verfahr-Einheit 30, eine Bildaufnahme-Einheit 31, eine Registrier-Einheit 32 und eine Kalibrier-Einheit 33 auf.

Die Verfahr-Einheit 30 dient zum Verfahren der Bühne 12 relativ zu der Kamera 28 in einem ersten Koordina-tensystem $K_1$. Das erste Koordinatensystem $K_1$ ist relativ zu dem Stativ 2 und der Kamera 28 ortsfest. Die x-Achse des ersten Koordinatensystems $K_1$ wird mit $x_1$ bezeichnet und verläuft parallel zu der x-Richtung. Die y-Achse des ersten Koordinatensystems $K_1$ wird mit $y_1$ bezeichnet und verläuft parallel zu der y-Richtung.

Die Bildaufnahme-Einheit 31 dient zum Ansteuern der Kamera 28 zum Aufnehmen von digitalen Bildern und zum Auswerten von diesen Bildern. Das Aufnehmen und Auswerten der Bilder erfolgt in einem zweiten Koordinatensy-stem $K_2$, das relativ zu einem Aufnahmebereich 34 der Kamera 28 ortsfest ist.

Das zweite Koordinatensystem $K_2$ ist relativ zu dem ersten Koordinatensystem $K_1$ um einen Winkel $\varphi$ gedreht. Ein Ursprung $U_1$ des ersten Koordinatensystems $K_1$ und ein Ursprung $U_2$ des zweiten Koordinatensystems $K_2$ sind um einen Translationsvektor $\mathbf{t_1}$ bezogen auf das erste Koordinatensystem $K_1$ gegeneinander verschoben. Der Translati-onsvektor $\mathbf{t_1}$ beschreibt somit die Lage des zweiten Koordinatensystems $K_2$ im ersten Koordinatensystem $K_1$. Die x-Achse des zweiten Koordinatensystems $K_2$ wird mit $X_2$ bezeichnet. Entsprechend wird die y-Achse des zweiten Koor-dinatensystems $K_2$ mit $y_2$ bezeichnet.

Der Aufnahmebereich 34 der Kamera 28 ist in Pixel 35 unterteilt, die die Auflösung der Kamera 28 charakterisieren. Dementsprechend weist das zweite Koordinatensystem $K_2$ diskrete Pixelkoordinaten auf.

Die Registrier-Einheit 32 dient zum Registrieren von mit der Kamera 28 aufgenommenen Bildern. In der Registrier-Einheit 32 ist ein Registrierverfahren implementiert, das ein subpixelgenaues Registrieren der Bilder ermöglicht.

Die Kalibrier-Einheit 33 dient zum Ermitteln einer Koordinatentransformationsmatrix $\mathbf{A}$ zwischen dem ersten Koordinatensystem $K_1$ und dem zweiten Koordinatensystem $K_2$. Die Koordinatentransformationsmatrix $\mathbf{A}$ stellt ein Ka-libriermaß dar. In die Kalibrier-Einheit 33 ist ein lineares Optimierungsverfahren zur Minimierung eines Gütefunktionals implementiert.

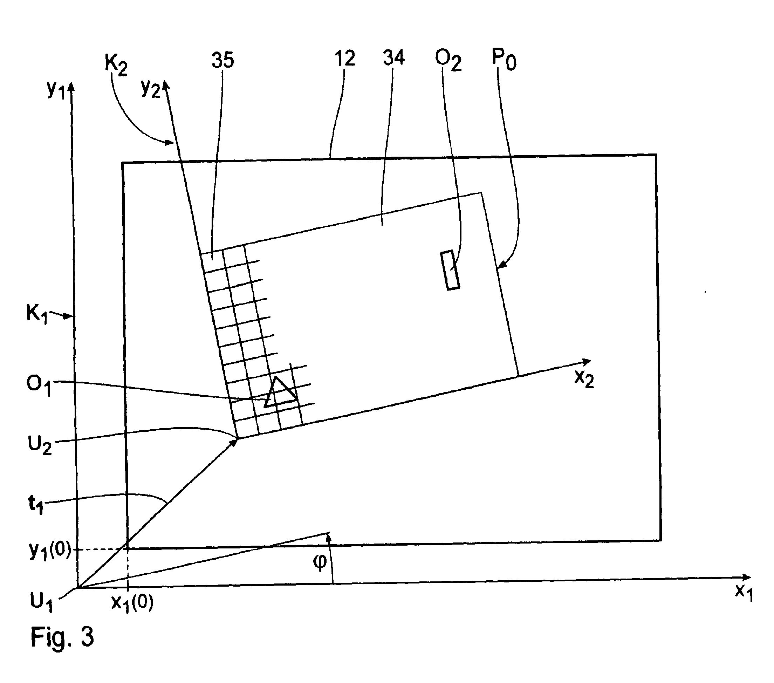

Nachfolgend wird das erfindungsgemäße Verfahren zum Kalibrieren des Bühne-Kamera-Systems genauer beschrieben. In Fig. 3 ist die Bühne 12 relativ zu der Kamera 28 in einer beliebigen Referenzstellung $S_0$ angeordnet. Die Stellung der Kamera 28 ist in Fig. 3 durch den zugehörigen Aufnahmebereich 34 angedeutet. Auf der Bühne 12 ist in dem Aufnahmebereich 34 ein erstes Objekt $O_1$ und ein zweites Objekt $O_2$ angeordnet. Die Kamera 28 nimmt in der Referenzstellung $S_0$ ein Referenzbild $P_0$ mit den Objekten $O_1$, $O_2$ auf. Zu der Referenzstellung $S_0$ speichert die Verfahr-Einheit 30 die Koordinaten $x_1(0)$, $y_1(0)$ der Bühne 12 in dem ersten Koordinatensystem $K_1$.

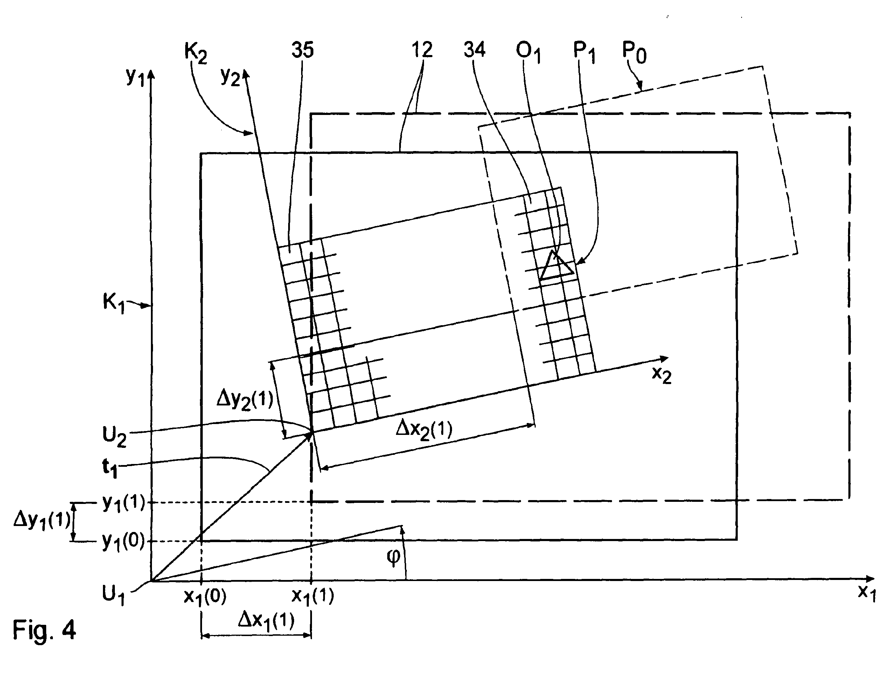

Anschließend wird die Bühne 12 relativ zu der Kamera 28 mittels des x-Antriebsmotors 14 und des y-Antriebsmotors 16 in der x-y-Ebene in eine von der Referenzstellung $S_0$ unterschiedliche Kalibrierstellung $S_1$ verfahren. Das Objekt $O_1$ befindet sich in der Kalibrierstellung $S_1$ weiterhin in dem Aufnahmebereich 34, wohingegen das Objekt $O_2$ durch das Verfahren der Bühne 12 aus dem Aufnahmebereich 34 herausbewegt wurde. Die Kalibrierstellung $S_1$ der Bühne 12 relativ zu der Kamera 28 ist in Fig. 4 veranschaulicht.

In der Kalibrierstellung $S_1$ wird mittels der Kamera 28 ein Kalibrierbild $P_1$ aufgenommen, auf dem sich das erste Objekt $O_1$ befindet. Die Verfahr-Einheit 30 speichert zu der Kalibrierstellung $S_1$ die Koordinaten $x_1(1)$, $y_1(1)$ der Bühne 12 in dem ersten Koordinatensystem $K_1$. Die Koordinaten $x_1(1)$, $y_1(1)$ in der Kalibrierstellung $S_1$ werden in einfacher Weise anhand der ausgeführten Schrittzahl des x-Antriebsmotors 14 in x-Richtung und des y-Antriebsmotors 16 in y-Richtung ermittelt. Die Verfahr-Einheit 30 ermittelt eine Verfahrstrecke $\Delta x_1(1)$, $Dy_1(1)$ der Bühne 12 von der Referenzstellung $S_0$ in die Kalibrierstellung $S_1$ in dem ersten Koordinatensystem $K_1$ nach folgenden Gleichungen:

$$\Delta x_1(1) = x_1(1) - x_1(0) \tag{1}$$

$$\Delta y_1(1) = y_1(1) - y_1(0) \tag{2}$$

Die Registrier-Einheit 32 registriert das Kalibrierbild $P_1$ mit dem Referenzbild $P_0$ anhand des Objektes $O_1$, das sich sowohl in dem Referenzbild $P_0$ als auch in dem Kalibrierbild $P_1$ befindet. Das Registrieren erfolgt mittels eines Ähnlichkeitsmaßes, das die Gleichheit des Referenzbildes $P_0$ und des Kalibrierbildes $P_1$ charakterisiert. Das Ähnlichkeitsmaß kann mittels bekannter Registrierverfahren optimiert werden. Als Registrierverfahren können flächenbasierte oder merkmalsbasierte Registrierverfahren eingesetzt werden. Dadurch, dass das Registrierverfahren die Intensitäten in den einzelnen Pixeln 35 auswertet, erfolgt die Registrierung des Kalibrierbildes $P_1$ mit dem Referenzbild $P_0$ subpixelgenau. Subpixelgenau bedeutet, dass eine Objektverschiebestrecke $\Delta x_2(1)$, $\Delta y_2(1)$ mit einer kleineren Auflösung als den diskreten Pixelkoordinaten ermittelbar ist. Das Registrieren des Kalibrierbildes $P_1$ liefert somit die Objektverschiebestrecke $\Delta x_2(1)$, $\Delta y_2(1)$ in dem zweiten Koordinatensystem $K_2$.

Das Ermitteln der Koordinatetransformationsmatrix **A** als Kalibriermaß erfolgt mittels der Kalibrier-Einheit 33. Für die Berechnung der Koordinatentransformationsmatrix **A** wird davon ausgegangen, dass die Bühne 12 senkrecht zu der Kamera 28 steht. Eine Scherung wird vernachlässigt. Somit verlaufen die von den Koordinatensystem $K_1$, $K_2$ auf gespannten Ebenen parallel zueinander. Für eine zweidimensionale Ähnlichkeitstransformation gilt allgemein folgende Gleichung:

$$\mathbf{p}_1 = \mathbf{S} \cdot \mathbf{R} \cdot \mathbf{p}_2 + \mathbf{t}_1 = \mathbf{A} \cdot \mathbf{p}_2 + \mathbf{t}_1 \tag{3}$$

In Gleichung (3) bezeichnen:

$$\mathbf{p}_1 = \begin{pmatrix} x_1 \\ y_1 \end{pmatrix} \tag{4}$$

einen Punktvektor im ersten Koordinatensystem $K_1$,

$$\mathbf{p}_2 = \begin{pmatrix} x_2 \\ y_2 \end{pmatrix} \tag{5}$$

einen Punktvektor im zweiten Koordinatensystem $K_2$,

$$\mathbf{S} = \begin{pmatrix} s_x & 0 \\ 0 & s_y \end{pmatrix} \tag{6}$$

eine Skalierungsmatrix,

$$\mathbf{R} = \begin{pmatrix} \cos\varphi & -\sin\varphi \\ \sin\varphi & \cos\varphi \end{pmatrix} \tag{7}$$

eine Rotationsmatrix,

$$\mathbf{t}_1 = \begin{pmatrix} t_x \\ t_y \end{pmatrix} \tag{8}$$

den Translationsvektor, der die Lage des zweiten Koordinatensystems $K_2$ in dem ersten Koordinatensystem $K_1$ beschreibt.

Durch Differenzbildung von Gleichung (3) in zwei Punkten ergibt sich folgende Gleichung:

$$\Delta\mathbf{p}_1 = \mathbf{A} \cdot \Delta\mathbf{p}_2 \tag{9}$$

In Gleichung (9) ist der Translationsvektor $\mathbf{t}_1$ eliminiert, da Gleichung (9) Koordinatendifferenzen, also relative und keine absolute Koordinaten enthält.

$$\Delta\mathbf{p}_1 = \begin{pmatrix} \Delta x_1 \\ \Delta y_1 \end{pmatrix} \tag{10}$$

beschreibt die Verfahrstrecke der Bühne 12 von der Referenzstellung $S_0$ in eine Kalibrierstellung $S_1$.

$$\Delta\mathbf{p}_2 = \begin{pmatrix} \Delta x_2 \\ \Delta y_2 \end{pmatrix} \tag{11}$$

beschreibt die Objektverschiebestrecke von der Referenzstellung $S_0$ in eine Kalibrierstellung $S_1$.

Die Koordinatentransformationsmatrix $\mathbf{A}$ ergibt sich durch Multiplikation der Skalierungsmatrix $\mathbf{S}$ mit der Rotationsmatrix $\mathbf{R}$ unter Berücksichtigung, dass der Skalierungsfaktor in x-Richtung $s_x$ und der Skalierungsfaktor in y-Richtung $s_y$ gleich sind und somit durch einen richtungsunabhängigen Skalierungsfaktor s beschreibbar sind, zu:

$$A = \begin{pmatrix} s \cdot \cos \varphi & -s \cdot \sin \varphi \\ s \cdot \sin \varphi & s \cdot \cos \varphi \end{pmatrix} \qquad (12)$$

Wird in Gleichung (9) die Verfahrstrecke $\Delta x_1(1)$, $\Delta y_1(1)$ von der Referenzstellung $S_0$ in die Kalibrierstellung $S_1$ und die zugehörige Objektverschiebestrecke $\Delta x_2(1)$, $\Delta y_2(1)$ zwischen dem Referenzbild $P_0$ und dem Kalibrierbild $P_1$ eingesetzt, so ergibt sich ein lineares Gleichungssystem mit zwei Gleichungen und zwei Unbekannten s und $\varphi$. Dieses Gleichungssystem lässt sich analytisch lösen, wobei das Ergebnis die Koordinatentransformationsmatrix $A$ ist. Absolute Koordinaten können mittels Gleichung (3) ermittelt werden.

Um die Zuverlässigkeit der Berechnung der Koordinatentransformationsmatrix $A$ zu erhöhen, können mittels der Antriebsmotoren 14, 16 mehrere Kalibrierstellungen $S_n$ mit n=1 bis N angefahren werden, wobei in jeder Kalibrierstellung $S_n$ mittels der Kamera 28 ein Kalibrierbild $P_n$ mit n=1 bis N aufgenommen wird. Beim Anfahren der Kalibrierstellungen $S_n$ ist zu beachten, dass zumindest ein Teil eines der Objekte $O_1$, $O_2$, die sich im Referenzbild $P_0$ befinden, auch in jedem Kalibrierbild $P_n$ befindet, so dass ein Registrieren der Kalibrierbilder $P_n$ zu dem Referenzbild $P_0$ möglich ist. Zu jeder Kalibrierstellung $S_n$ wird eine Verfahrstrecke $\Delta x_1(n)$, $\Delta y_1(n)$ ermittelt. Entsprechend wird zu jedem Kalibrierbild $P_n$ eine Objektverschiebestrecke $\Delta x_2(n)$, $\Delta y_2(n)$ ermittelt. Durch Einsetzen der Verfahrstrecken $\Delta x_1(n)$, $\Delta y_1(n)$ und der zugehörigen Objektverschiebestrecken $\Delta x_2(n)$, $\Delta y_2(n)$ in Gleichung (9) entsteht ein überbestimmtes Gleichungssystem. Zur Lösung dieses überbestimmten Gleichungssystems wird das in die Kalibrier-Einheit 33 implementierte Optimierungsverfahren eingesetzt, das ein Gütefunktional, wie beispielsweise den quadratischen Fehler, minimiert. Als Ergebnis liefert das Optimierungsverfahren die Koordinatentransformationsmatrix $A$.

Durch das Kalibrieren der Koordinatensysteme $K_1$, $K_2$ ist eine subpixelgenaue Zuordnung zwischen den Pixelkoordinaten der Kamera 28 und der Position der Bühne 12 gegeben. Dies ermöglicht die Bühne 12 subpixelgenau zu verfahren und spezifische Punkte auf dem Objektträger 19 wiederholbar und zuverlässig anzufahren. Ein Ausrichtungsfehler der Kamera 28 wird ausgeglichen, da die Rotation des zweiten Koordinatensystems $K_2$ zu dem ersten Koordinatensystem $K_1$ in die Kalibrierung mit einbezogen ist. Die Kalibrierung ist voll automatisiert und kann mit beliebigen Objekten $O_1$, $O_2$ durchgeführt werden. Aufgrund des subpixelgenauen Registrierverfahrens und des Optimierungsverfahrens zur Ermittlung der Koordinatentransformationsmatrix $A$ ist die Kalibrierung genau und robust. Die Aufnahme eines größeren Bereichs des Objektträgers 19 in mehreren Bildern sowie die Aufnahme in unterschiedlichen Auflösungsstufen sind nach erfolgter Kalibrierung kein Problem mehr.

In der virtuellen Mikroskopie kann ein Objektträger 19 problemlos automatisch gescannt und digitalisiert werden. Durch die exakte Kalibrierung kann das Zusammensetzen der Bilder des Objektträgers 19 ohne eine Registrierung dieser Bilder erfolgen.

Weiterhin kann durch die exakte Kalibrierung das Screening von Zervix-Abstrichen automatisiert und objektiviert werden. Die Kalibrierung stellt sicher, dass keine Karzinomzellen gleichzeitig auf zwei Bildern zu finden sind und dass keine Karzinomzellen übersehen werden. Darüber hinaus werden Karzinomzellen, die sich an Bildrändern befinden, sauber aneinander gefügt.

Bei der automatischen Erstellung von Differentialblutbildern in der computerassistierten Mikroskopie wird der Objektträger 19 zunächst in einer niedrigen Auflösung gescannt. In den erhaltenen Bildern wird eine definierte Anzahl von Leukozyten mit Bildverarbeitungsverfahren automatisch detektiert. Mit der Information über die Position der Leukozyten auf dem Objektträger 19 werden die Leukozyten in einem nachfolgenden Schritt in einer höheren Auflösung erneut einzeln angefahren, fokussiert und aufgenommen, um mithilfe der höheren Auflösung den exakten Typ der einzelnen Leukozyten bestimmen zu können. Die Kalibrierung stellt bei der Aufnahme in niedriger Auflösung sicher, dass keine Leukozyten zweimal gescannt oder übersehen werden. Weiterhin stellt die Kalibrierung bei erneutem Anfahren der Leukozyten in einer höheren Auflösung sicher, dass die einzelnen Leukozyten im aktuellen Sichtfeld betrachtet und untersucht werden können.

Bei der Untersuchung auf Malaria wird durch die Kalibrierung sichergestellt, dass jeder Erythrozyt untersucht und in einer höheren Auflösung sicher angefahren werden kann.

**Patentansprüche**

1. Verfahren zum Kalibrieren eines Bühne-Kamera-Systems eines Mikroskops, umfassend die Schritte:

    - Bereitstellen eines Bühne-Kamera-Systems (12, 14, 16, 28, 29) mit einer Bühne (12) und einer Kamera (28), wobei

        -- die Bühne (12) und die Kamera (28) relativ zueinander in einer Referenzstellung ($S_0$) angeordnet sind, und

-- auf der Bühne (12) in einem Aufnahmebereich (34) der Kamera (28) mindestens ein Objekt ($O_1$, $O_2$) angeordnet ist,

- Aufnehmen eines Referenzbildes ($P_0$) des mindestens einen Objektes ($O_1$, $O_2$) in der Referenzstellung ($S_0$),
- Verfahren des Bühne-Kamera-Systems (12, 14, 16, 28, 29) mittels mindestens eines elektrischen Antriebsmotors (14, 16) derart, dass die Bühne (12) und die Kamera (28) relativ zueinander in mindestens einer Kalibrierstellung ($S_n$) angeordnet sind, wobei

-- das Bühne-Kamera-System (12, 14, 16, 28, 29) in mehrere unterschiedliche Kalibrierstellungen ($S_n$) verfahren wird,
-- sich jede der Kalibrierstellungen ($S_n$) von der Referenzstellung ($S_0$) unterscheidet, und
-- sich zumindest ein Teil des mindestens einen Objektes ($O_1$, $O_2$) in jeder der Kalibrierstellungen ($S_n$) in dem Aufnahmebereich (34) der Kamera (28) befindet,

- Aufnehmen jeweils eines Kalibrierbildes ($P_n$) des mindestens einen Objektes ($O_1$, $O_2$) in jeder der Kalibrierstellungen ($S_n$),
- Ermitteln jeweils einer Verfahrstrecke ($\Delta x_1$ (n), $\Delta y_1$ (n)) von der Referenzstellung ($S_0$) in die jeweilige Kalibrierstellung ($S_n$) in einem ersten Koordinatensystem ($K_1$) mittels einer elektronischen Steuereinrichtung (29),
- Registrieren des jeweiligen Kalibrierbildes ($P_n$) mit dem Referenzbild ($P_0$) anhand des mindestens einen Objektes ($O_1$, $O_2$) mittels der elektronischen Steuereinrichtung (29), wobei das Registrieren des jeweiligen Kalibrierbildes ($P_n$) subpixelgenau erfolgt,
- Ermitteln jeweils einer Objektverschiebestrecke ($\Delta x_2$ (n), $\Delta y_2$ (n)) in einem zweiten Koordinatensystem ($K_2$) anhand des jeweiligen registrierten Kalibrierbildes ($P_n$) mittels der elektronischen Steuereinrichtung (29), und
- Ermitteln eines Kalibriermaßes (A) aus den Verfahrstrecken ($\Delta x_1$ (n), $\Delta y_1$ (n)) und den Objektverschiebestrecken ($\Delta x_2$(n), $\Delta y_2$(n)) zum Kalibrieren der Koordinatensysteme ($K_1$, $K_2$) mittels der elektronischen Steuereinrichtung (29), wobei das Kalibriermaß (A) mittels eines Optimierungsverfahrens ermittelt wird und das Optimierungsverfahren ein Gütefunktional minimiert.

2. Verfahren nach Anspruch 1, **dadurch gekennzeichnet, dass** das Verfahren in einer x-y-Ebene erfolgt und die Verfahrstrecke ($\Delta x_1$ (n), $\Delta y_1$ (n)) in dem ersten Koordinatensystem ($K_1$) eine x-Komponente ($\Delta x_1$(n)) und eine y-Komponente ($\Delta y_1$(n)) aufweist.

3. Verfahren nach Anspruch 1 oder 2, **dadurch gekennzeichnet, dass** die Verfahrstrecke ($\Delta x_1$(n), $\Delta y_1$(n)) aus einer Schrittanzahl des mindestens einen elektrischen Antriebsmotors (14, 16) ermittelt wird.

4. Verfahren nach einem der Ansprüche 1 bis 3, **dadurch gekennzeichnet, dass** das Referenzbild ($P_0$) mehrere Objekte ($O_1$, $O_2$) und jedes Kalibrierbild ($P_n$) zumindest einen Teil eines der Objekte ($O_1$, $O_2$) enthält, wobei das Registrieren der Kalibrierbilder ($P_n$) zumindest teilweise anhand unterschiedlicher Objekte ($O_1$, $O_2$) erfolgt.

5. Verfahren nach einem der Ansprüche 1 bis 4, **dadurch gekennzeichnet, dass** das Optimierungsverfahren als Minimum-Unbiased-Scale-Estimator ausgebildet ist.

6. Verfahren nach einem der Ansprüche 1 bis 5, **dadurch gekennzeichnet, dass** das Kalibriermaß (A) eine Koordinatentransformationsmatrix zwischen dem ersten und zweiten Koordinatensystem ($K_1$, $K_2$) ist.

7. Mikroskop, umfassend ein Bühne-Kamera-System (12, 14, 16, 28, 29) mit

- einer Kamera (28) zur Aufnahme von Bildern ($P_0$, $P_n$),
- einer Bühne (12), wobei

-- die Bühne (12) und die Kamera (28) relativ zueinander verfahrbar sind, und
-- auf der Bühne (12) in einem Aufnahmebereich (34) der Kamera (28) mindestens ein Objekt ($O_1$, $O_2$) positionierbar ist,

- mindestens einem elektrischen Antriebsmotor (14, 16) zum relativen Verfahren der Bühne (12) und der Kamera (28) zueinander,
- einer elektronischen Steuereinrichtung (29),
**dadurch gekennzeichnet, dass** die Steuereinrichtung (29)

- eine Verfahr-Einheit (30) aufweist, mittels der das Verfahren von einer Referenzstellung ($S_0$) in mehrere unterschiedliche Kalibrierstellungen ($S_n$) steuerbar und jeweils eine Verfahrstrecke ($\Delta x_1(n)$, $\Delta y_1(n)$) in einem ersten Koordinatensystem ($K_1$) ermittelbar ist,

- eine Bildaufnahme-Einheit (31) aufweist, mittels der das Aufnehmen eines Referenzbildes ($P_0$) des mindestens einen Objektes ($O_1$, $O_2$) in der Referenzstellung ($S_0$) und jeweils eines Kalibrierbildes ($P_n$) des mindestens einen Objektes ($O_1$, $O_2$) in jeder der Kalibrierstellungen ($S_n$) steuerbar ist,

- eine Registrier-Einheit (32) aufweist, mittels der das jeweilige Kalibrierbild ($P_n$) mit dem Referenzbild ($P_0$) registrierbar und eine jeweilige Objektverschiebestrecke ($\Delta x_2(n)$, $\Delta y_2(n)$) in einem zweiten Koordinatensystem ($K_2$) ermittelbar ist, wobei die Registrier-Einheit (32) derart ausgebildet ist, dass das jeweilige Kalibrierbild ($P_n$) subpixelgenau mit dem Referenzbild ($P_0$) registrierbar ist und

- eine Kalibrier-Einheit (33) aufweist, mittels der ein Kalibriermaß (A) aus den Verfahrstrecken ($\Delta x_1(n)$, $\Delta y_1(n)$) und den Objektverschiebestrecken ($\Delta x_2(n)$, $\Delta y_2(n)$) zum Kalibrieren der Koordinatensysteme ($K_1$, $K_2$) ermittelbar ist, wobei die Kalibrier-Einheit (33) derart ausgebildet ist, dass das Kalibriermaß (A) mittels eines Optimierungsverfahrens zur Minimierung eines Gütefunktionals ermittelbar ist.

8. Bühne-Kamera-System nach Anspruch 7, **dadurch gekennzeichnet, dass** der mindestens eine elektrische Antriebsmotor (14, 16) als Schrittmotor ausgebildet ist.

**Claims**

1. Method for calibrating a stage-camera system of a microscope, comprising the steps of:

- providing a stage-camera system (12, 14, 16, 28, 29) with a stage (12) and a camera (28), wherein

-- the stage (12) and the camera (28) are arranged relative to one another in a reference position (So), and
-- at least one object ($O_1$, $O_2$) is arranged on the stage (12) in a recording region (34) of the camera (28),

- recording a reference image ($P_0$) of the at least one object ($O_1$, $O_2$) in the reference position (So),
- moving the stage-camera system (12, 14, 16, 28, 29) with at least one electric drive motor (14, 16) such that the stage (12) and the camera (28) are arranged relative to one another in at least one calibration position ($S_n$), wherein

-- the stage-camera system (12, 14, 16, 28, 29) is moved to several different calibration positions ($S_n$),
-- each calibration position ($S_n$) is different from the reference position (So), and
-- at least a portion of the at least one object ($O_1$, $O_2$) is located in the recording region (34) of the camera (28) in each calibration position ($S_n$),

- recording a respective calibration image ($P_n$) of the at least one object ($O_1$, $O_2$) in each calibration position ($S_n$),
- determining a respective travel distance ($\Delta x_1(n)$, $\Delta y_1(n)$) from the reference position ($S_0$) to the respective calibration position ($S_n$) in a first coordinate system ($K_1$) with an electronic control device (29),
- registering the respective calibration image ($P_n$) with the reference image ($P_0$) based on the at least one object ($O_1$, $O_2$) with the electronic control device (29), wherein the registration of the respective calibration image ($P_n$) is performed with subpixel accuracy,
- determining a respective object displacement distance ($\Delta x_2(n)$, $\Delta y_2(n)$) in a second coordinate system ($K_2$) based on the respective registered calibration image ($P_n$) with the electronic control device (29), and
- determining a calibration measure (A) from the travel distances ($\Delta x_1(n)$, $\Delta y_1(n)$) and the object displacement distances ($\Delta x_2(n)$, $\Delta y_2(n)$) for calibrating the coordinate systems ($K_1$, $K_2$) with the electronic control device (29), wherein the calibration measure (A) is determined with an optimization method and the optimization method minimizes a quality function.

2. Method according to claim 1, **characterized in that** the travel is performed in an x-y plane and the travel distance ($\Delta x_1(n)$, $\Delta y_1(n)$) in the first coordinate system ($K_1$) has an x-component ($\Delta x_1(n)$) and a y-component ($\Delta y_1(n)$).

3. Method according to claim 1 or 2, **characterized in that** the travel distance ($\Delta x_1(n)$, $\Delta y_1(n)$) is determined from a number of steps of the at least one electric drive motor (14, 16).

4. Method according to one of the claims 1 to 3, **characterized in that** the reference image ($P_0$) includes several

objects ($O_1$, $O_2$) and each calibration image ($P_n$) includes at least a portion of one of the objects ($O_1$, $O_2$), wherein the registration of the calibration images ($P_n$) is performed at least in part based on different objects ($O_1$, $O_2$).

5. Method according to one of the claims 1 to 4, **characterized in that** the optimization method is implemented as Minimum-Unbiased-Scale-Estimator.

6. Method according to one of the claims 1 to 5, **characterized in that** the calibration measure (A) is a coordinate transformation matrix between the first and the second coordinate system ($K_1$, $K_2$).

7. Microscope comprising a stage-camera system (12, 14, 16, 28, 29) with

   - a camera (28) for recording images ($P_0$, $P_n$),
   - a stage (12), wherein

     -- the stage (12) and the camera (28) are movable relative to one another, and
     -- at least one object ($O_1$, $O_2$) can be positioned on the stage (12) in a recording region (34) of the camera (28),

   - at least one electric drive motor (14, 16) for moving the stage (12) and the camera (28) relative to one another,
   - an electronic control device (29)
   **characterized in that** the control device (29)
   - has a drive unit (30), with which the movement from a reference position ($S_0$) to several different calibration positions ($S_n$) can be controlled and a respective travel distance ($\Delta x_1(n)$, $\Delta y_1(n)$) can be determined in a first coordinate system ($K_1$),
   - has an image recording unit (31), with which recording of a reference image ($P_0$) of the at least one object ($O_1$, $O_2$) in the reference position ($S_0$) and of a respective calibration image ($P_n$) of the at least one object ($O_1$, $O_2$) in each of the calibration positions ($S_n$) can be controlled,
   - has a registration device (32), with which the respective calibration image ($P_n$) can be registered with the reference image ($P_0$) and a respective object displacement distance ($\Delta x_2(n)$, $\Delta y_2(n)$) can be determined in a second coordinate system ($K_2$), wherein the registration unit (32) is configured so that the respective calibration image ($P_n$) can be registered with the reference image ($P_0$) with subpixel accuracy and
   - has a calibration device (33), with which a calibration measure (A) can be determined from the travel distances ($\Delta x_1(n)$, $\Delta y_1(n)$) and the object displacement distances ($\Delta x_2(n)$, $\Delta y_2(n)$) for calibrating the coordinate systems ($K_1$, $K_2$), wherein the calibration device (33) is configured so that the calibration measure (A) can be determined by an optimization method for minimizing a quality function.

8. Stage-camera system according to claim 7, **characterized in that** the at least one electric drive motor (14, 16) is implemented as a stepper motor.

**Revendications**

1. Procédé pour le calibrage d'un système de caméra-scène d'un microscope, comprenant les étapes de :

   - préparation d'un système de caméra-scène (12, 14, 16, 28, 29) comprenant une scène (12) et une caméra (28), où

     -- la scène (12) et la caméra (28) sont disposées l'une par rapport à l'autre dans une position de référence ($S_0$), et
     -- au moins un objet ($O_1$, $O_2$) est disposé sur la scène (12) dans un domaine de prise de vue (34) de la caméra (28),

   - saisie d'une image de référence ($P_0$) d'au moins un objet ($O_1$, $O_2$) dans la position de référence ($S_0$),
   - mise en oeuvre du système caméra-scène (12, 14, 16, 28, 29) au moyen d'au moins un moteur à entraînement électrique (14, 16) de telle sorte que la scène (12) et la caméra (28) soient orientées relativement l'une par rapport à l'autre dans au moins une position de calibrage ($S_n$), où

     -- le système caméra-scène (12, 14, 16, 28, 29) est mis en oeuvre dans plusieurs positions différentes de calibrage ($S_n$),

-- chacune des positions de calibrage ($S_n$) se différencie de la position de référence ($S_0$), et

-- au moins une partie d'au moins un objet ($O_1$, $O_2$) se situe dans le domaine de prise de vue (34) de la caméra (28) dans chacune des positions de calibrage ($S_n$),

- chaque fois, saisie d'une image de calibrage ($P_n$) d'au moins un objet ($O_1$, $O_2$) dans chacune des positions de calibrage ($S_n$),

- chaque fois, détermination d'un parcours de mise en oeuvre ($\Delta x_1(n)$, $\Delta y_1(n)$) de la position de référence ($S_0$) dans chaque position de calibrage ($S_n$) dans un premier système de coordonnées ($K_1$) au moyen d'un dispositif de commande électronique (29),

- enregistrement de chaque image de calibrage ($P_n$) avec l'image de référence ($P_0$) en tenant compte d'au moins un objet ($O_1$, $O_2$) au moyen d'un dispositif de commande électronique (29), l'enregistrement de chaque image de calibrage ($P_n$) étant effectué avec une précision d'un subpixel,

- chaque fois, détermination d'un parcours de déplacement de l'objet ($\Delta x_2(n)$, $\Delta y_2(n)$) dans un deuxième système de coordonnées ($K_2$) à l'aide de chaque image de calibrage ($P_n$) enregistrée au moyen du dispositif de commande électronique (29), et

- détermination d'une grandeur de calibrage (A) à partir des parcours de mise en oeuvre ($\Delta x_1(n)$, $\Delta y_1(n)$) et des parcours de déplacement d'objet ($\Delta x_2(n)$, $\Delta y_2(n)$) pour le calibrage du système de coordonnées ($K_1$, $K_2$) au moyen du dispositif de commande électronique (29), la grandeur de calibrage (A) étant évaluée au moyen d'un procédé d'optimisation et le procédé d'optimisation minimisant un système fonctionnel de qualité.

2. Procédé selon la revendication 1 **caractérisé en ce que** le procédé se déroule dans un plan x-y et le parcours de mise en oeuvre ($\Delta x_1(n)$, $\Delta y_1(n)$) dans le premier système de coordonnées ($K_1$) présente une composante x ($\Delta x_1(n)$) et une composante y ($\Delta y_1(n)$).

3. Procédé selon les revendications 1 ou 2 **caractérisé en ce que** le parcours de mise en oeuvre ($\Delta x_1(n)$, $\Delta y_1(n)$) est évalué à partir d'un nombre de pas d'au moins un moteur à entraînement électrique (14, 16).

4. Procédé selon l'une des revendications de 1 à 3 **caractérisé en ce que** l'image de référence ($P_0$) contient plusieurs objets ($O_1$, $O_2$) et chaque image de calibrage ($P_n$) contient au moins une partie d'un objet ($O_1$, $O_2$), l'enregistrement des images de calibrage ($P_n$) étant effectué au moins partiellement à l'aide des divers objets ($O_1$, $O_2$).

5. Procédé selon l'une des revendications de 1 à 4 **caractérisé en ce que** le procédé d'optimisation est conçu comme un Minimum-Unbiased-Scale-Estimator.

6. Procédé selon l'une des revendications de 1 à 5 **caractérisé en ce que** la grandeur de calibrage (A) est une matrice de transformation de coordonnées entre un premier et un second système de coordonnées ($K_1$, $K_2$).

7. Microscope, comprenant un système de caméra-scène (12, 14, 16, 28, 29) comportant

- une caméra (28) pour la prise d'images ($P_0$, $P_n$),

- une scène (12), où

-- la scène (12) et la caméra (28) peuvent être déplacées l'une par rapport à l'autre, et

-- au moins un objet ($O_1$, $O_2$) peut être positionné sur la scène (12) dans un domaine de prise de vue (34) de la caméra (28),

- au moins un moteur à entraînement électrique (14, 16) pour le déplacement relatif de la scène (12) et de la caméra (28) l'une par rapport à l'autre,

- un dispositif de commande électronique (29), **caractérisé en ce que** le dispositif de commande (29)

- présente une unité de mise en oeuvre (30) au moyen de laquelle le procédé d'une position de référence ($S_0$) dans plusieurs positions de calibrage ($S_n$) différentes peut être commandé et chaque fois un parcours de mise en oeuvre ($\Delta x_1(n)$, $\Delta y_1(n)$) peut être évalué dans un premier système de coordonnées ($K_1$),

- présente une unité de prise d'image (31) au moyen de laquelle la prise d'une image de référence ($P_0$) dans la position de référence ($S_0$) et chaque fois d'une image de calibrage ($P_n$) d'au moins un objet ($O_1$, $O_2$) peut être commandée dans chacune des positions de calibrage ($S_n$),

- présente une unité d'enregistrement (32) au moyen de laquelle, chaque fois, l'image de calibrage ($P_n$) peut être enregistrée avec l'image de référence ($P_0$) et, chaque fois, un parcours de déplacement d'objet ($\Delta x_2(n)$, $Dy_2(n)$) peut être déterminé dans un second système de coordonnées ($K_2$), l'unité d'enregistrement (32) étant conçue de telle manière que chaque image de calibrage ($P_n$) peut être enregistrée avec une précision d'un subpixel avec l'image de référence ($P_0$), et

- présente une unité de calibrage (33) au moyen de laquelle une grandeur de calibrage (A) peut être déterminée à partir des parcours de mise en oeuvre ($\Delta x_1(n)$, $\Delta y_1(n)$) et des parcours de déplacement de l'objet ($\Delta x_2(n)$, $\Delta y_2(n)$) pour le calibrage des systèmes de coordonnées ($K_1$, $K_2$), l'unité de calibrage (33) étant conçue de telle manière que la grandeur de calibrage (A) peut être déterminée au moyen d'un procédé d'optimisation pour la minimisation d'un système fonctionnel de qualité.

**8.** Système caméra-scène selon la revendication 7 **caractérisé en ce qu'**au moins un moteur d'entraînement électrique (14, 16) est conçu sous la forme d'un moteur pas à pas.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020149628 A1
- US 20060034543 A1

- US 3986007 A

**In der Beschreibung aufgeführte Nicht-Patentliteratur**

- Extension of Phase Correlation to Subpixel Registration. *IEEE Transactions on Image Processing,* Marz 2002, vol. 11 (3

- **JAMES V. MILLER ; CHARLES V. STEWARD.** MUSE: Robust Surface Fitting using Unbiased Scale Estimates. *1996 IEEE Computer Society Conference on Computer Vision and Pattern Recognition,* 1996, 300